# EUROPEAN PATENT SPECIFICATION

(11) **EP 1 388 260 B1**
(45) Date of publication and mention of the grant of the patent: **14.06.2006**
(21) Application number: 02722536.6
(22) Date of filing: 03.04.2002
(51) Int. Cl.: H04N 7/173

(54) **INTERACTIVE MEDIA RESPONSE PROCESSING SYSTEM**
SYSTEM ZUR ERFASSUNG VON DATEN, INSBESONDERE FÜR INTERAKTIVE FERNSEHSYSTEME
SYSTEME DE TRAITEMENT DE REPONSES PAR MEDIA INTERACTIF

(30) Priority: 03.04.2001 US 825409
(43) Date of publication of application: 11.02.2004
(73) Proprietor: Gtech Rhode Island Corporation, West Greenwich, RI 02817 (US)
(72) Inventor: LUPO, Stephen, Westerly, RI 02891 (US); LOUGH, Ira, North Smithfield, RI 02896 (US); NAPOLITANO, Tom, Coventry, RI 02816 (US)
(74) Representative: Bird, Ariane
(86) International application number: PCT/IB2002/001043
(87) International publication number: WO 2002/082815

(56) References cited:
- EP-A- 0 946 060
- WO-A-99/66726
- US-A- 6 160 989

## Description

### FIELD OF INVENTION

The present invention resides in the field of interactive media, and more particularly relates to an apparatus and method for processing responses received from set top boxes and related devices in interactive media networks.

### BACKGROUND OF THE INVENTION

Interactive media refers to interactive content that may originate from multiple heterogeneous interactive networks and associated access devices including Interactive Television (iTV), Interactive Internet PCs and networked appliances, and Interactive mobile and wireless hand-held devices. Interactive media systems generally allow a content provider to broadcast information to a user and the user to respond and thereby participate in the broadcast. The specific types of access devices include but are not limited to a television, personal computer, cellular telephone, pager, or various hand-held electronic devices such as those manufactured by PALM.

A basic form of interactive broadcasting includes information which is distributed on one media and invites a response through other media. An example of this type of interactivity is telephony, where a television program invites viewers to participate in a telephone poll. Viewers participate by dialing a particular number corresponding to the viewer's selection from among a number of choices. Other interactive television programs invite user participation by voting on a web site over the Internet. For example, news analysis programs frequently include online polls conducted simultaneously with a news broadcast. The user can log onto the news program web site and make a selection, and the poll results are displayed on the television screen. There are also interactive programs that implement both of these programming techniques.

Interactive Television refers to applications in which viewers interact in some way with the broadcast content. Interactive TV encompasses a range of interactivity types. At the most basic level, viewers can interact with their televisions simply by using a digital set-top box (STB). With no signal sent outside of the home, the STB can store information and customize the display based on viewer preferences. Examples of this type of interactivity are scrollable/customizable electronic programming guides and personal recording services. At a higher level of sophistication, viewers can send requests to a server via dial-up, digital back channel, or satellite transmission. The server sends request replies back to the STB from which the response requests originated. Examples of this type of interactivity are polling applications where viewers can "play along" with game shows, or applications tied to commerce in which viewers can respond to ads with requests for information or by making a purchase. However, existing iTV systems suffer from a lack of sufficient bandwidth to support real-time interactive processing desirable with this type of interactivity. Further, existing systems are not capable of processing the high volume of responses which may be received for a given application.

In prior art iTV systems, there is generally a central communications server, also known as a head-end, which distributes television content to individual subscribers through set-top boxes and receives interactive information in the form of responses. These systems are often incapable of handling a high volume of responses in real time. Consequently there have been a number of systems patented that attempt in some fashion to overcome this capacity limitation.

One of these patents, U.S. Patent 5,857,190, discloses an event logging system for use in an iTV network. An event evaluator residing with the user determines whether an event is loggable or non-loggable. The loggable events are preferably batched together and sent to a head end.

In U.S. Patent 6,067,107, an iTV system is disclosed in which user responses are stored in broadcast receivers, assigned priority values based on the type of data contained therein, and periodically transmitted to a local data center. Typically the responses are transmitted at 24-hour intervals. The local data center stores the responses in a response database, and then the responses are cross-referenced with subscriber information and sent to a master data center.

Both of these systems do not have the ability to either handle large volumes of requests in real time or provide real-time feedback to content providers. Further, the information is stored in various databases in a hierarchical or relational manner, which limits the capacity of each database. Relational database designs typically introduce increased latencies, reliability, and availability problems when employed in interactive media systems. These databases require substantial maintenance, especially when attempting to scale with multiple distributed databases. Relational databases which are employed in relational database-centric transaction processing architectures suffer from the following deficiencies: limited real-time processing, limited volume and cost-prohibitive scaling capability, distributed database synchronization, database corruption and continuing maintenance, interrupted transaction recovery reprocessing and unavailability of originating transaction requests, limited audit trail granularity capability, and lack of practical real-time data access for decision reporting and analysis.

### SUMMARY OF THE INVENTION

The present invention is directed to an interactive media response processing system and method which processes subscriber responses using non-relational database structures. Such a system and method also are capable of processing a high volume of responses in real time, and also have the capability of providing real time feedback to a content provider. In a more particular aspect of the present invention, a distributed structure is employed, whereby the primary components are separated in physical space so that each performs a specified task and then forwards responses through the system.

In an interactive media system according to the present invention, interactive content is distributed or broadcasted to a subscriber using any of a plurality of techniques, mechanisms or systems known to those skilled in the art such as through interactive cable television, interactive satellite television, interactive PC and networked appliances, and interactive mobile and cellular telephone networks. The interactive content is broadcast to subscribers via access devices including set top boxes or other devices known to those skilled in the art for connecting with the response processing system, used in conjunction with remote controls, keyboards, televisions, interactive radios, networked computers and appliances, mobile and cellular telephones, voice recognition devices, and/or wireless handheld devices such as those manufactured by PALM and clones thereof.

Response requests are sent by a subscriber connected to a subscriber network via one of the above access devices in response to the interactive content viewed on a television screen or other display. Response requests can be associated with the following event class types, including: interactive polling or voting, interactive sweepstakes, interactive advertising, interactive "game shows", electronic commerce, betting and wagering, and requests for additional information in response to a show or advertisement. It is within the scope of the present invention for the subscriber network to comprise in part the techniques, mechanisms, or systems used for distributing or broadcasting the interactive content as well as other and different types of subscriber networks, (e.g., telephony).

Event applications typically have a common question and answer format, but many different actions can be taken by the application according to the information gathered. In addition to questions and answers (responses), game events may also use clues, which can be associated with the questions. Event applications execute based on a predetermined set of interactive rules, and are capable of processing and logging subscriber-input responses. Event applications also can differ in how they process information for aggregation purposes, and how they determine what types of responses are to be sent back to either the data stream head (for broadcast to all access devices) or to each individual viewer (response replies).

The interactive media response processing system of the present invention includes a response collection and aggregation network performing collection and aggregation functions in real time, using non-relational database structures. In a more particular aspect, the collection and aggregation network performs the foregoing functions using a distributed processing mechanism. An event development kit and a content development kit facilitate content authoring and interpretation of subscriber responses by the response collection and aggregation network. The event development kit configures event applications in an appropriate format so that the responses can be read and interpreted by the response collection and aggregation network. The content development kit is available from third party vendors and is known to those skilled in the art as a tool for converting conventional content into interactive content. Interactive content is broadcast to subscribers via set top boxes or other access devices. The interactive content also can include a trigger transmitted with an application to be sent back with a subscriber response request for the purpose of identifying the response request. The subscriber responses are forwarded through the response collection and aggregation network. Aggregated results can be accessed by content producers via a producer browser associated with each of the content producers. Similarly, content developers have access to aggregated response information through developer computers. Thus, the content producers and content developers can access aggregated result information (aggregated data) in real time, while an event is running. The aggregated data can be stored on a web server for producer and developer use and also transmitted to a database server to be forwarded to a data warehouse.

The stored results can be logged, stored, and archived in the data warehouse, for auditing and reporting purposes. The data warehouse stores information for the purpose of statistics analysis and reporting to interested parties. Aggregated results information can be referenced as a way to conduct post-event surveys and market research, while maintaining appropriate privacy and security standards. For example, responses to an interactive shopping program can be analyzed to determine what types of items are most popular, and the program can be modified accordingly. Such modifications can be effected while the event is running or for an event to be run subsequently. Sensitive subscriber information can be encrypted and stored in a secure data store section to ensure safe handling.

The interactive media response network of the present invention has the capability of being adjusted or adapted so as to be used in conjunction with one or more cable television subscriber networks, satellite television subscriber networks, mobile subscriber networks, and/or networked PCs and computer appliances subscriber networks known to those skilled in the art. Each of the subscriber networks includes a distribution network for broadcasting interactive content to subscribers via set top boxes or other access devices. These one or more networks also can be used to receive response requests from subscribers which are transmitted to one or more communications message servers connected to the networks. Each communications message server normalizes the interface from the subscriber network and forwards response batches to one or more response collectors, where responses can be collected, processed, and logged. Response collectors transmit the collected responses to one or more aggregators, each of the aggregators performing a real-time data collection, processing, logging, and aggregation function. In a further embodiment, a master aggregator is provided to aggregate information from the one or more aggregators to provide a master information store and coordinate the scheduling of all interactive event applications. In an exemplary embodiment, response collectors are located with local distribution networks and communications message servers, and the aggregators are located in a data center that can be remote from the response collectors. In another embodiment, the collectors are located in the central data center in closer physical proximity to the aggregators.

The present invention is configured so as to be capable of handling responses being transmitted in any of a number of different formats known to those skilled in the art, including but not limited to the following: HTTP, HTTPS (SSL), TCP and UDP over IP, FTP, HTML, XML, Enterprise Java, and Internet browser technology. The response aggregators, response collectors, communications message servers, and other components operate independently of set-top boxes or other access devices and are designed to be server-side platform independent.

Other aspects and embodiments of the invention are discussed below.

### BRIEF DESCRIPTION OF THE DRAWINGS

For a fuller understanding of the nature of the present invention, reference is made to the following detailed description taken in conjunction with the accompanying drawing figures wherein like reference characters denote corresponding parts throughout the several views and wherein:
FIG. 1A is a schematic view of an interactive media system with a response collection and aggregation network of the present invention;
FIG. 1B is a schematic view of the interactive media system of FIG. 1A showing a more detailed view of a distribution network as connected to access devices and the return path from the access devices;
FIG. 2A is a schematic view of an exemplary interaction between a response collector and response aggregator of the present invention;
FIG. 2B is a schematic view of an exemplary interaction between a communications message server and response collector of the present invention;
FIG. 3 is a schematic view of an exemplary arrangement of collectors to an aggregator and a master aggregator;
FIG. 4 is a flow diagram depicting the flow of data in a preferred embodiment of the present invention;
FIG. 5 is a flow diagram depicting the typical messaging protocols employed in the flow diagram of FIG. 4;
FIG. 6 is a schematic view of an interactive media response network heterogeneous access model, according to one preferred embodiment of the present invention;
FIG. 7 is a schematic view of an interactive television response network model for multiple interactive television networks, according to another preferred embodiment of the present invention; and
FIG. 8 is a schematic view of an interactive television response network distributed aggregator and collector model, according to a further preferred embodiment of the present invention.

### DETAILED DESCRIPTION OF THE INVENTION

### INCLUDING THE PREFERRED EMBODIMENT(S)

An interactive media response processing platform is disclosed including a system and method for processing subscriber responses associated with an interactive activity, preferably in real time. Using the distributed network approach of the present invention, real-time interactivity between the broadcast program and the active subscribers is facilitated, because by virtue of the non-relational distributed database structure of the network, there is sufficient capacity to support high volume processing and real-time interactivity.

In the interactive media response processing system, interactive content may originate from interactive access networks and associated devices including cable, satellite, and terrestrial television networks; Internet networks; mobile and wireless networks; and other types of networks which support interactivity or using any other techniques, methods, mechanisms, or systems known to those skilled in the art. Access devices include but are not limited to interactive Set Top Boxes (STBs) or other devices known to those skilled in the art that are connectable with the response processing system and used in conjunction with remote controls, keyboards, televisions, interactive radios, networked computers and appliances, mobile phones, voice recognition devices, and/or wireless hand-held devices.

Response requests are sent by a user connected to a subscriber network via one of the above access devices which is capable of receiving an interactive media broadcast and transmitting signals through the subscriber network. Response requests may be associated with interactive events including game shows, polling or voting, sweepstakes, advertisements, sporting events, wagering applications, and shopping purchases via electronic commerce. Advertisements and sporting events are examples of complex interactive events, which may incorporate other interactive event types to provide further interactivity within the active interactive context. The interactive response processing system can support very high levels of interactivity where audience response is integrated into a broadcast in real time, for such applications as audience polling and real-time auctions. It also is within the scope of the present invention for one type of subscriber network to be used to broadcast or distribute interactive content and another type of subscriber network to be used to transmit the subscriber's response requests.

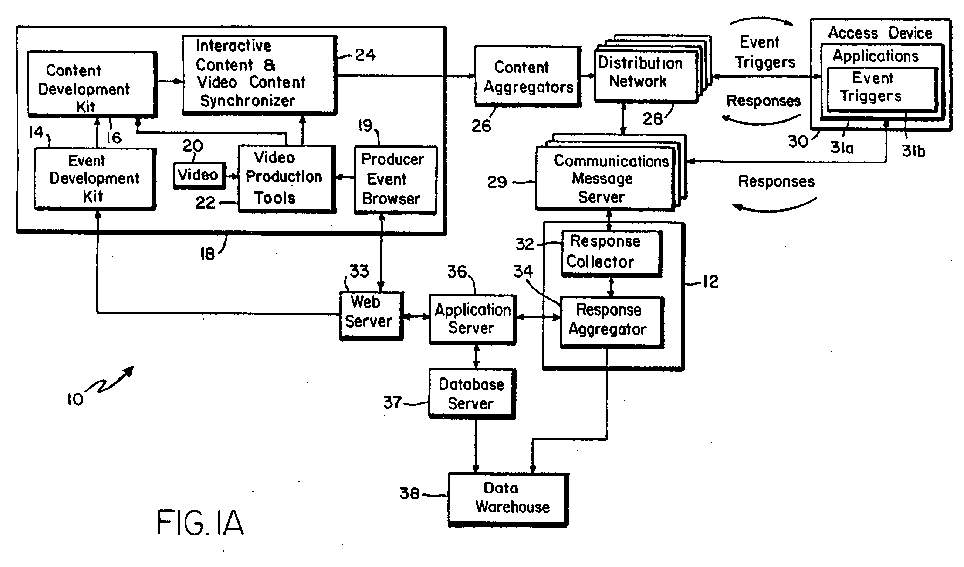

The interactive response processing system according to one aspect of the present invention performs interactive response request collection and aggregation functions utilizing distributed processing systems. FIG. 1A illustrates an interactive media system 10 for supporting the broadcast of an interactive media event or program (e.g. a polling event or an application for supporting shopping/electronic commerce). The interactive media system 10 includes a response collection and aggregation network 12, which maintains individual subscriber and combined aggregated results from one or more network(s) of subscribers in persistent storage and provides real-time feedback to content producers based on these results. The collection and aggregation network 12 is compliant with established and emerging interactive media industry standards and associated technologies including, but not limited to, Advanced Television Enhancement Forum (ATVEF), ATVEF Advanced Television Forum (which also uses the ATVEF standard), and Digital Video Broadcast Multimedia Home Platform (DVB-MHP).

As shown in FIG. 1A, components of the interactive media system 10 include an event development kit 14 and a content development kit 16. The event development kit 14 and content development kit 16 represent content authoring tools which enable content developers to interface their interactive content in an appropriate format so that responses can be read and interpreted by the response collection and aggregation network 12. Alternatively, the interactive system can operate without the event development kit or the content development kit if interactive content is otherwise interfaced so that response requests are readable by the response collection and aggregation network 12. It should be recognized that the content development kit 16 is well known to those skilled in the art and is a commercially available tool for converting conventional content into interactive content. The event development kit configures event applications in an appropriate format so that subscriber responses can be read and interpreted by the response collection and aggregation network 12.

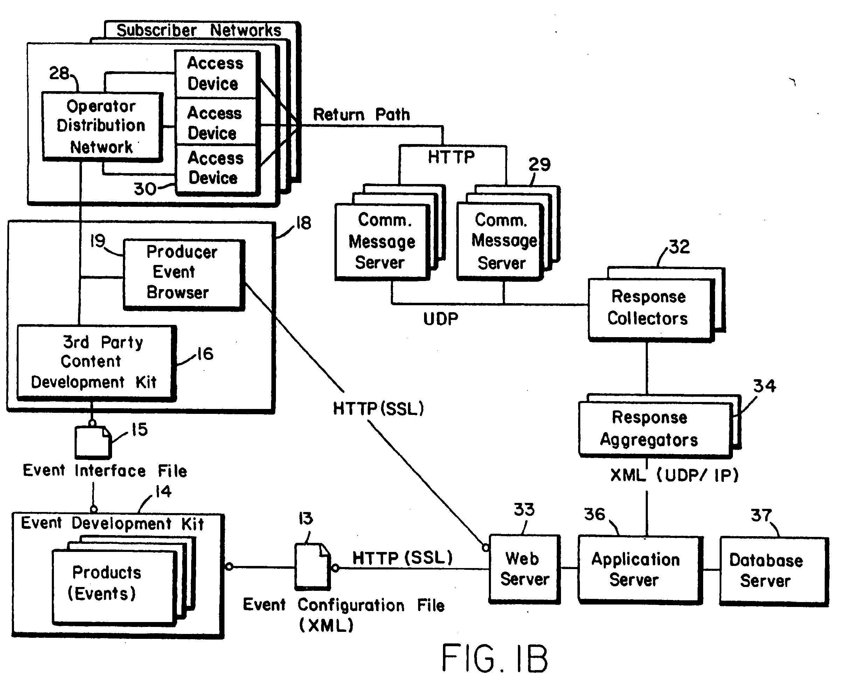

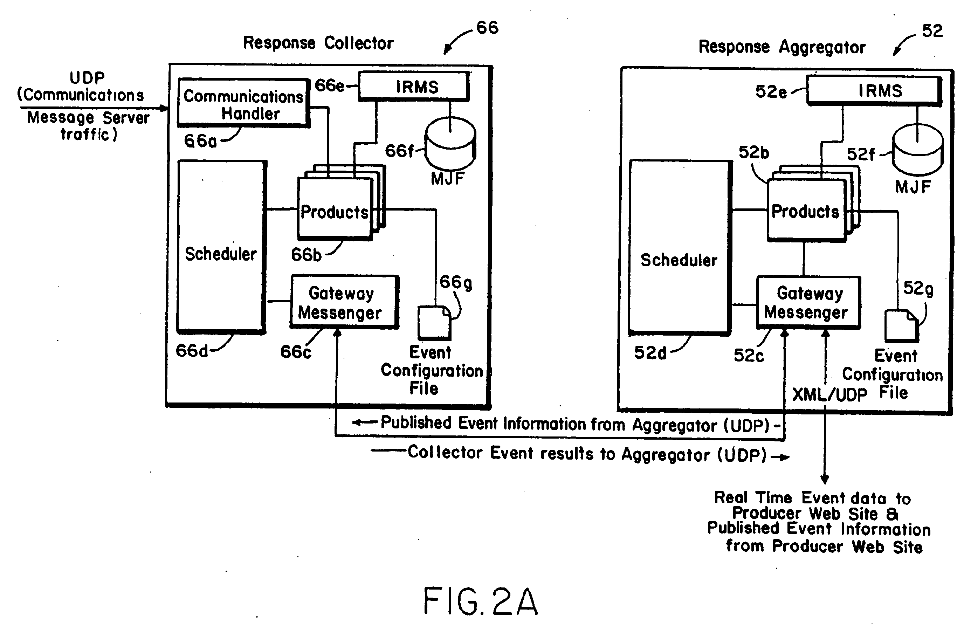

As shown in FIG. 1B, the event development kit 14 produces an event interface file 15 which is combinable with the content development kit 16 to conform interactive content to an appropriate readable format. For cable and satellite television, the event interface file 15 preferably conforms to ATVEF or DVB-MHP standards. The interactive content also can be transmitted with set top box event triggers. These triggers are a mechanism for identifying a response request received in the response collection and aggregation network 12. The event development kit 14 communicates event parameters and rules being employed in a given interactive application back to a web server 33 in the response collection and aggregation network 12, so that the network can accurately process and log responses received. For example, the event development kit 14 can generate an event configuration file 13 to reside on the network pathway (as seen in FIG. 1B). Alternately, the event parameters and rules can reside in event configuration files resident in each response collector and response aggregator, as discussed with reference to FIG. 2A.

The content development kit 16 includes any of a number of commercially available tools for authoring interactive content (i.e. content which can be inserted into a television or other media broadcast and which invites user responses). A suitable content development kit is sold under the trade name OpenTV OpenAuthor.

The content authoring and production section 18 is configured and arranged to generate broadcast signals having interactive content interspersed therein. In the illustrated content production section 18, conventional video 20 is manipulated using interactive video production tools 22, such as those manufactured by Chyron Corporation, which prepare the video to receive interactive content. A producer event browser 19 is operably connected to the video production tools 22, so that relevant information provided by the producer can be incorporated into an interactive broadcast. The producer event browser 19 is operably connected to the web server 33 in the response collection and aggregation network 12. Accordingly, response information is transmitted from the web server 33 to the producer event browser 19 so that it can be incorporated into an event broadcast.

This content is transmitted by the video production tools 22 to the content development kit 16 and to an interactive content and video content synchronizer 24, which synchronizes interactive content and video to produce a combined signal of conventional and interactive media content. This combined signal is aggregated with the software code from the content development kit 16 as interfaced with the event development kit 14. Conventional content aggregators 26 perform the aforementioned aggregation function, so the resulting signal is suitable for transmission to subscribers over one or more distribution networks 28. This resultant signal transmits interactive content in the appropriate software compliant format so that responses received from subscriber set top boxes are capable of being read, interpreted, and logged by the response collection and aggregation network 12. It should be recognized that the foregoing is illustrative of an exemplary content production section 18, and that it is within the knowledge or skill of anyone skilled in the art to arrive at other configurations and arrangements of functionalities otherwise consistent with the purpose and function of the content production section herein described.

The signals sent to an access device 30 over one of the distribution networks 28 preferably include set top box event triggers which serve as identifiers and are transmitted with response requests to the response collection and aggregation network 12 for a given interactive event. As shown in FIG. 1A, each subscriber is connected to the distribution network 28 via an access device 30 such as a set top box or other interactive access device. It will be apparent to those of ordinary skill in the art that the access device 30, as shown in FIG. 1, is representative of various devices known in the art that are capable of receiving and transmitting interactive content over a network. In particular embodiments, the access device 30 comprises a set top box, a personal computer, a cellular phone, or other electronic device.

The access device 30 is capable of storing and processing a plurality of interactive event applications 31a received from content producers, wherein each of the applications can be associated with one or more corresponding event triggers 31b. When a subscriber responds to a broadcast application by making an interactive response request through the access device 30, the appropriate event trigger 31b is saddled with the response and transmitted back through the distribution network or other type of network provided for receiving and transmitting such responses. The distribution networks 28 are capable of multiple path content transmission, so that upon receiving response requests from one or more access devices 30, the response requests can then be forwarded to one or more communications message servers 29 of the response collection and aggregation network 12.

In certain embodiments, e.g. when the distribution network 28 is a satellite distribution network, response replies can either be transmitted back through the distribution network 28 or sent to the one or more communication message servers 29 by an alternative path, as seen in FIG. 1A. The communications message servers 29 normalize the interface between the one or more distribution networks and the response collectors and response aggregators to enable an efficient data flow through the response collection and aggregation network. As seen in FIG. 1B, in a preferred method of data transmission, response requests from access devices 30 are transmitted to communications message servers 29 in HTTP format. The communications message servers 29 convert the response requests from HTTP format to UDP format to enable more efficient data transmission to the response collectors 32 and the response aggregators 34.

The response collection and aggregation network 12 includes one or more response collectors 32 performing a response collection function, each response collector receiving response requests from the one or more communications message servers 29. Response collectors 32 exchange information with one or more response aggregators 34 which perform both collection and aggregation functions. Response aggregators 34 generally collect and aggregate response information from the one or more collectors 32 and transmit the aggregated information back to the content production section 18 via an application server 36 and the web server 33 to provide real-time feedback to content producers. The application server 36 is also connected to a database server 37 which receives event information for transmission to a data warehouse 38 for logging and storage. Preferably, transfer of aggregated information to the data warehouse 38 occurs after an event has run, in order to preserve system capacity.

The response collection and aggregation network 12 is capable of providing secure, reliable, and redundant super high volume response collection and processing within each of the deployed head-end infrastructures (through the subscriber/distribution networks) of the interactive media system 10. The response collectors 32 are each configured and arranged so as to be capable of processing in excess of 100,000 responses or transactions per second. This is several orders of magnitude better than conventional relational database-centric transaction-based architectures that typically are capable of processing about 200 or less responses or transactions per second. The response collectors 32 of the present invention are capable of handling events with a transmission rate of fewer than 100,000 responses/transactions per second as well. For example, an event having a transmission rate of 1,000 responses per second can be handled simultaneously and along the same pathway as another event having a transmission rate of 75,000 responses per second. A further event with a transmission rate of 200 responses per second can be handled along the same pathway. The responses or transactions are processed in the collection and aggregation network of a single system, i.e. a single closed-loop information flow path. In specific embodiments, responses and transactions are logged and stored redundantly to achieve a system reliability of about 99%, more particularly about 99.99999%.

The collection and aggregation network 12 processes the responses in real time, without the need to assign priority values to responses received. Each collector is capable of hosting a multiplicity of events, as demonstrated above, reducing the number of components required to process responses. Thus, the interactive media system 10 is capable of supporting events which have limited appeal and very few simultaneous responses, and events having wide appeal and several millions of simultaneous interactive responses.

The response collection and aggregation network 12 performs interactive response request collection and aggregation functions utilizing non-relational database structures (e.g., flat file databases) and distributed processing mechanisms. Specifically, the present invention teaches a logically distributed architecture design capable of providing super high-volume real-time transaction request collection, processing, aggregation, and results aggregation reporting. The architecture's logical separation of these components supports partially distributed and fully distributed processing scenarios.

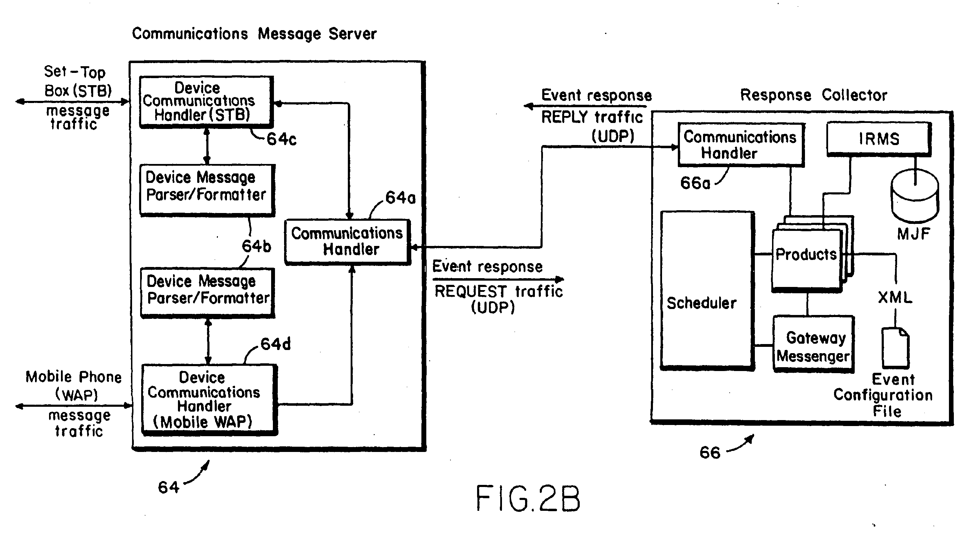

The primary components of the response collection and aggregation network include one or more response aggregators, response collectors, and communications message servers (see FIGS. 2B and 4-8). In the partially or fully distributed model of the present invention, one or more of these primary components can be deployed physically separate from the other components.

FIG. 2A illustrates a detailed view of a typical response collector 66 (identical to the response collectors 32 in FIGS. 1A and 1B) and a typical response aggregator 52 (identical to the response aggregators 34 in FIGS. 1A and 1B) of the present invention. The response collector 66 includes a plurality of sub-components which enable it to perform collection functions. The response collector 66 includes a communications handler 66a which processes incoming traffic (i.e. normalized responses which are in UDP or other standard format) from a communications message server 64 (see FIG. 2B, wherein the communications message server 64 is identical to the communications message servers 29 in FIGS. 1A and 1B) and routes messages to and from appropriate interactive event products 66b. Each of the event products 66b corresponds to an interactive event application, a portion of an event, or a collection of individual events. Each event product 66b collects, processes, and stores information related to its respective event and provides instructions to other components of the collector 66. Response replies, if desired in a given event application, are generated by the products 66b and transmitted back through one or more subscriber networks (e.g. distribution networks 28 shown in FIG. 1A) via the communications handler 66a.

The response collector 66 includes a scheduler 66d which defines when and how an event is to be hosted on the response collection and aggregation network 12. For example, the scheduler 66d determines what time of day a particular event application will be broadcast over a subscriber network and communicates with an aggregator-based scheduler 52d and other collectors so that the appropriate products 66b/52b are configured to process responses. The scheduler 66d records and distributes pertinent event information to a gateway messenger 66c linked directly to the products 66b, and the gateway messenger 66c also serves as the connection between the response collector 66 and the response aggregator 52, whereby collector event results are transmitted to the aggregator for further processing and aggregation, and published event information is sent from the aggregator to the collector to enable collector scheduling and hosting of events.

The collector 66 can further include an event configuration file 66g generated by the event development kit 14 and transmitted to aggregators 52 and collectors 66 for communicating the appropriate parameters and rules for a given event. The products 66b can access the event configuration file when necessary to obtain additional scheduling information for an event.

The response collector 66 also further includes an Interactive Response Management System (IRMS) 66e which logs transactions/responses as directed by the event products 66b. The event products 66b determine whether a response should be logged. When the IRMS 66e logs a response, it appends a log record to the Master Journal File (MJF) 66f corresponding to the response. The MJF is a data file which stores logged response information for transmission to the response aggregator 52 via the gateway messenger 66c, and which can be transmitted to the data warehouse (described below) for retrieval and analysis.

The event products 66b transmit collected response information to the gateway messenger 66c for the purpose of forwarding the information to the response aggregator 52. The response information generally includes summary data in a form which can be processed in an aggregator which handles response information from one or more collectors. A gateway messenger 52c in the response aggregator 52 receives the collected response information and routes it to the appropriate products 52b in the aggregator 52. Products 66b and 52b are non-relational database structures with extremely high response capacity such that the responses and response information can be processed in high volume and in real time.

The response aggregator 52 is constructed in a manner similar to the response collector 66. Collected response information received in the products 52b is aggregated in the appropriate product of the aggregator 52. Each aggregator 52 includes an IRMS 52e which appends a MJF 52f as described above. Further, to obtain event rules and parameters, the products 52b can access an event configuration file 52g generated by the event development kit 14.

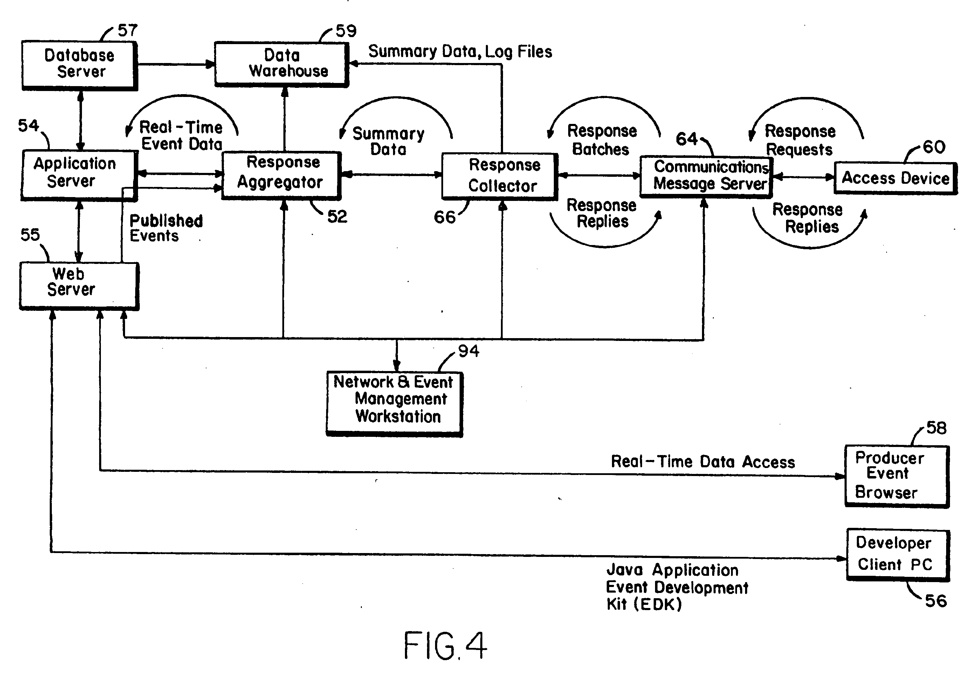

A gateway messenger 52c provides two-way interaction between the aggregator and an application server 54 (as described below with reference to FIG. 4, wherein the application server 54 is identical to the application server 36 in FIGS. 1A and 1B), and can also be used to provide connectivity to external systems for further processing of interactive responses. The gateway messenger 52c communicates real time event data to a producer web site and receives published event information (i.e. rules and parameters of an event) from the producer web site via the application server. The published event information is incorporated into the event configuration files 52g and 66g in the aggregators and collectors, respectively. Published event information can be sent back through the gateway messenger 52c to the response collector. Because responses are transferred through the collector and aggregator in real time, the response information reaches the content producers in real time. This allows content producers to make real time modifications to the interactive content being broadcasted to subscribers to tailor the content to the responses received from subscribers and in accordance with particular response patterns.

The functionalities corresponding to the above-described sub-components are in the form of software applications executable on one or more computing or processing systems. In an exemplary, illustrative embodiment, a response collector 66 or response aggregator 52 according to the present invention includes any of a number of multi-processor computing systems known to those skilled in the art, including for example an SMP system and software application programs for executing thereon, configured and arranged so as to be capable of performing the above-described functions of the response collector and aggregator sub-components.

FIG. 2B shows the interaction between the response collector 66 and a communications message server 64. The communications message server 64 normalizes the interface from one or more subscriber networks and its associated access devices (e.g. set top boxes) to the response collector 66 and the response aggregator 52. By normalizing response transmission, i.e. transmitting responses in a data format readable by a collector 66 and/or an aggregator 52, an efficient data flow can be maintained through the interactive media response network.

The communications message server 64 includes a communications handler 64a connected to a device communications handler for set top boxes (STB) 64c and a device communications handler for mobile phone/WAP communications 64d. The communications handler 64a controls how incoming response requests are processed in the communications message server and is responsible for maintaining interactive response processing sessions between the collectors and access devices, thereby managing the creating, persistence, and destruction of the sessions (e.g. HTTP sessions) associated with subscriber access devices. The set top box communications handler 64c receives response requests from set top boxes via cable, satellite, or terrestrial subscriber networks and, if required, delivers corresponding response replies. The mobile phone communications handler 64d receives response requests from mobile phones via mobile phone access networks and, if required, delivers corresponding response replies. The communications handler 64a controls the flow of response traffic to and from the communications handlers 64c and 64d.

Device message parsers/formatters 64b receive response requests from the communications handlers 64c and 64d and normalize the response requests such that the response collector 66 receives the requests in a standard format. The message parsers/formatters 64b include message parsers which process incoming response requests and strip off all unnecessary information, and message formatters which format the parsed response requests to create messages in the desired format. For example, as discussed herein, response requests transmitted from set top boxes in cable or satellite subscriber networks are generally in HTTP or HTTPS (HTTP with SSL security) format. The message parsers/formatters 64b receive the response requests from the set top box communications handler 64c and convert the response requests to Universal Datagram Packet (UDP) format. Similarly, the message parsers/formatters 64b convert response requests transmitted by mobile subscriber networks from WAP format to UDP format.

The message parsers/formatters 64b exchange information with their respective device communications handlers 64c and 64d, so that response requests are routed in UDP format to the communications handler 64a, which transmits the response requests to the communications handler 66a in a response collector 66. The collector communications handler 64a receives response replies from the collector 66 and delivers the response replies to the appropriate communications handler 64c, 64d for transmission back through a subscriber/distribution network. Although the device communications handlers 64c and 64d as shown are intended for use with set top boxes and mobile telephones, respectively, other types of devices can be supported in the communications message server 64, including but not limited to communications handlers adapted to receive signals from Internet appliances and personal electronic devices.

The communications handler 64a further provides the capability of bundling and unbundling messages. Packetizing (bundling) of response requests and de-packetizing (unbundling) of response replies provides increased communications efficiencies in the communications message server, in order to effectively process different volumes of messaging traffic, including extremely high volumes of messages. Thus, the communications message server 64 is capable of sustaining high message traffic spikes and bursts resulting from large scale simultaneous event participation by many subscribers.

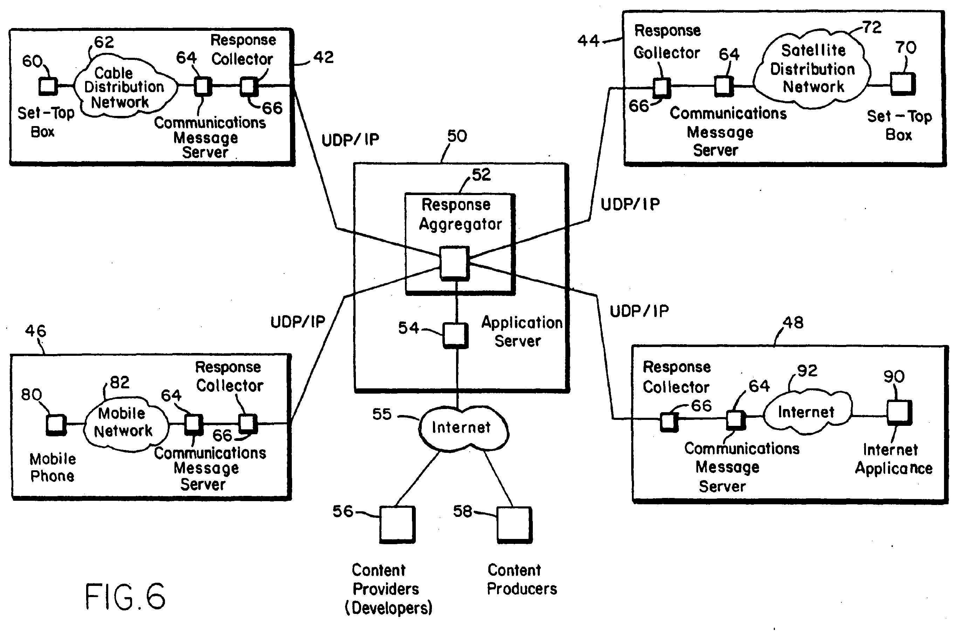

The communications message server 64 preferably operates in one of two ways. The communications message server 64 interfaces with a subscriber network directly via the network operator's infrastructure server platform (as depicted in FIGS. 2B and 6). In an alternate response path, the communications message server 64 can interface with a subscriber network indirectly via the network operator's connectivity infrastructure (not shown), bypassing the network operator's infrastructure server platform.

The functionalities corresponding to the above-described components of the communications message server 64 are in the form of one or more software applications executable on one or more computing or processing systems. In an exemplary, illustrative embodiment, the communications message server 64 includes a computing system having one or more processors and one or more software applications programs for executing thereon, configured and arranged so as to be capable of performing the above-described functions of the communications message server sub-components.

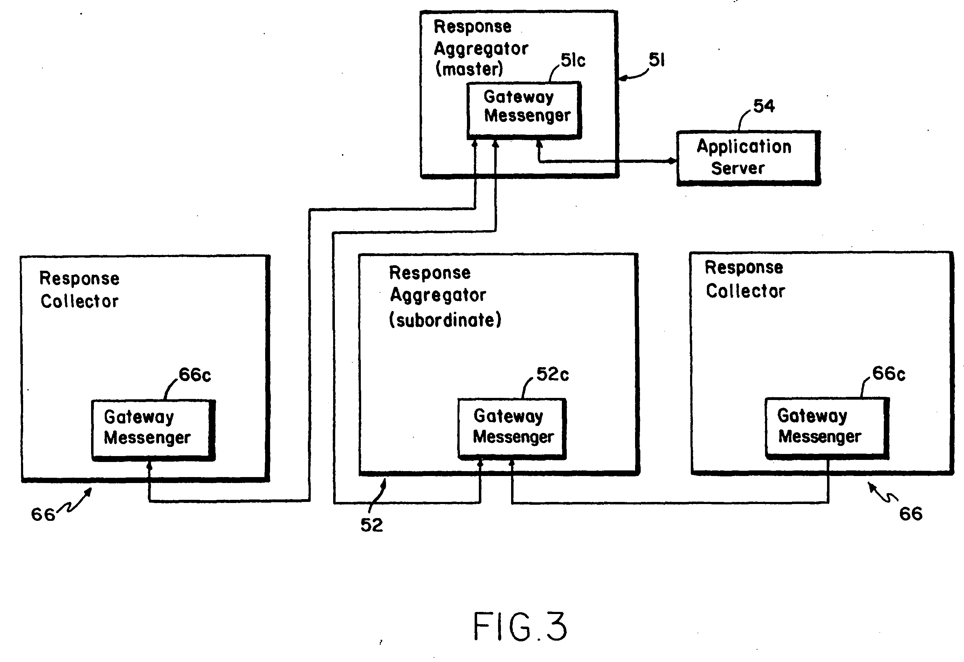

FIG. 3 illustrates the relationship of one or more collectors 66 to one or more aggregators 52. The collectors and aggregators can be configured and arranged so as to form any one of a number of relational arrangements, including but not limited to one-to-one, a plurality or multiplicity of collectors to an aggregator, and a plurality of collectors to a plurality of aggregators. In certain embodiments of the present invention having more than one aggregator in the network, the collection and aggregation network can include a master aggregator 51, constructed in a manner similar to aggregators 52, which aggregates the results from each individual aggregator 52 and provides real time event feedback to content producers and developers through an application server 54 (discussed below). As seen in FIG. 3, response collectors 66 are operably connected to a subordinate aggregator 52, which is operably connected to a master aggregator 51 via the respective gateway messenger sub-components.

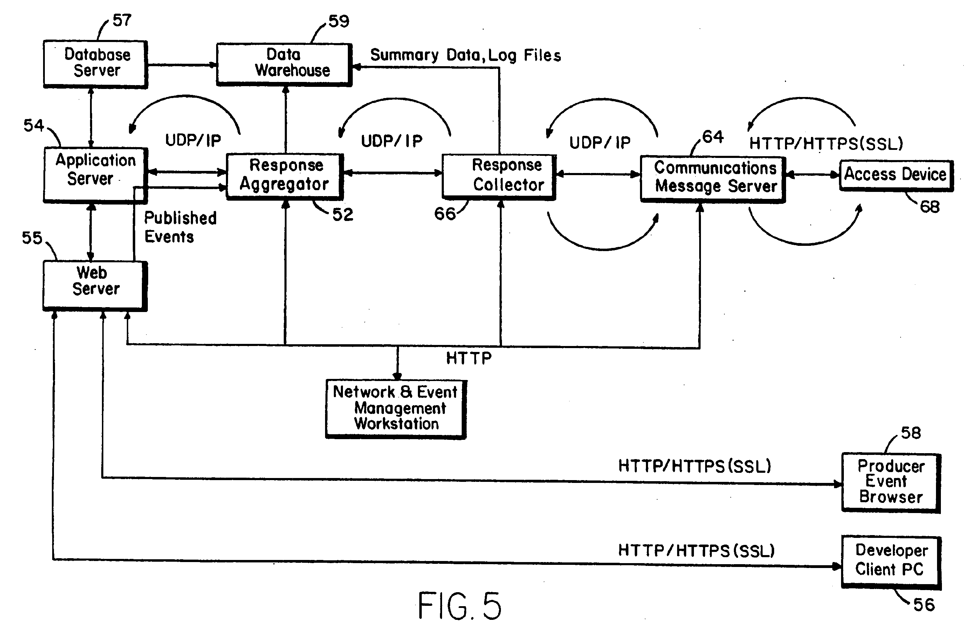

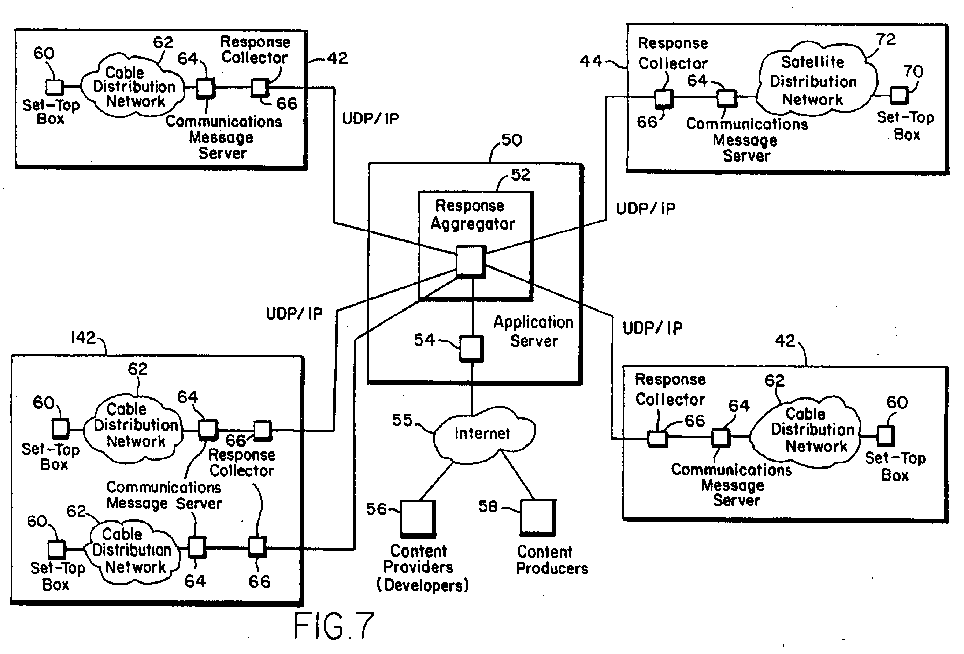

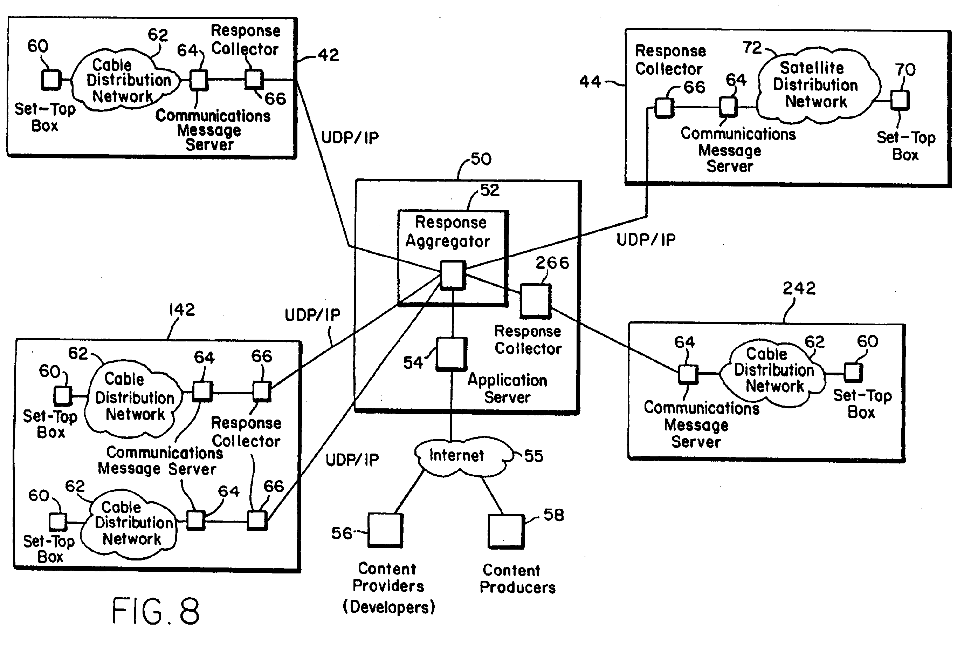

FIGS. 4 and 5 depict typical data flow and communications standards, respectively, employed in the interactive media response network of FIG. 6 (and also applicable to FIGS. 7 and 8). As seen in FIG. 4, a subscriber can view interactive content through an access device 60 and issue response requests to be handled by the communications message server 64. The communications message server 64 normalizes the responses and transmits responses or response batches to the response collector 66. The response collector 66 receives the responses/response batches, and then separates, processes, and logs the responses. This information is then collected and aggregated in the response aggregator 52. The response aggregator 52 provides response information to the application server 54, which can transmit information to a web server 55 to provide real time feedback to content producers and content developers. The application server 54 is also connected to a database server 57 which transfers aggregated response information to a data warehouse 59 for storage.

The application server 54 is operably connected to the web server 55, which provides real-time response information to event producers accessible through a producer event browser 58, so that such information can be integrated into interactive broadcasts. Developers can access the web server 55 using their personal computers 56, in order to publish event information so that network aggregators and collectors can handle the responses associated with events. In addition to event information, the content developers (also known as content providers) can provide additional interactive content which is to be inserted directly into an event broadcast. Such information can be provided to complement changes inserted by content producers. A network and event management workstation 94 coordinates each event in accordance with the aggregator and collector event configuration files, discussed above with reference to FIG. 2A.

Real-time data is exchanged between the producer event browser 58 and the web server 55 such that producers can analyze real time subscriber response information and modify interactive content accordingly. Further, information related to published events is transmitted back through the system to be incorporated into the aggregator event configuration file 52g and the collector event configuration file 66g. As discussed above, producers can view aggregated response information and modify interactive event broadcasts in accordance with response patterns. For example, if subscribers/users responding to an interactive polling event are voting in a particular way, the producer can supplement the event broadcast with additional information or commercial advertisements directed to the users' choices. Also, users are able to view updated interactive events which incorporate the results of their own participation in the event. In the above example, the user could participate in the polling event and then see the results of that poll displayed on the access device including the user's tally and the votes of other users.

As seen in FIG. 5, common industry technical standards are used for communicating between the various components of the interactive media response network. Information transmitted between the access device 60 and the communications message server 64 preferably is sent in HTTP or HTTPS (HTTP with SSL security) format. Internet Protocols (IP) are preferably used for transmitting response information between the communications message server 64 and the response collector 66 (preferably Universal Datagram Packets (UDP) format), and between the response collector 66 and the response aggregator 52 (also preferably UDP format). Information transmitted between the response aggregator 52 and the application server 54 preferably is sent in UDP format. The producer event browser 58 and developer client computers 56 can communicate with the web server 55 using HTTP or HTTPS (SSL) format. For the purpose of providing event parameters and rules to the response collection and aggregation network, the network and event management workstation 94 can communicate with the response aggregator, response collector, and producer web site in HTTP format. It will be apparent based on the foregoing discussion that, e.g., response aggregator 52 refers to one or more response aggregators, and there may also be one or more of any other components as shown in FIGS. 4 and 5. Furthermore, the above communications protocols and preferred communications formats are simply representative of preferred data transmission formats utilizing the foregoing invention. Any of the following formats may be used for transferring information between one or more of the above components: HTTP, HTTPS (SSL), TCP and UDP over IP, FTP, HTML, XML, Enterprise Java, and Internet browser technology. The response aggregators, response collectors, communications message servers, and other components discussed above operate independently of set-top boxes or other access devices and are designed to be server-side platform independent.

FIG. 6 illustrates an interactive media response network 40 for multiple heterogeneous subscriber access networks according to a preferred embodiment of the present invention. As seen in FIG. 6, multiple heterogeneous subscriber networks 42, 44, 46, and 48 are linked to a data center 50 including one or more response aggregators 52. The subscriber networks can include an interactive television subscriber network for cable distribution 42 utilizing the ATVEF or DVB-MHP standards, an interactive television subscriber network for satellite distribution 44 utilizing the ATVEF or DVB-MHP standards, an interactive cellular phone and mobile subscriber network 46 using Wireless Application Protocol (WAP), and an interactive personal computer (PC) and/or networked appliances subscriber network 48.

The interactive television subscriber network 42 preferably includes a cable distribution network 62 for distributing interactive content to a plurality of subscribers, each of the subscribers being linked to the network via a set top box 60 situated on or in close proximity to their television set or built into the set itself. Using a remote control, a keyboard, or other interactive device, the user/subscriber transmits requests in response to interactive content viewed on the television screen and thereby participates in the broadcast. The user's response requests are received in the set top box 60 and transmitted through the cable distribution network 62 to a communications message server 64. The communications message server 64 transmits responses to a response collector 66 which is preferably housed within the subscriber network 42. After collection, responses are transmitted to the data center 50 for aggregation. In an alternate embodiment, the communications message server 64 can transmit responses to a response collector housed within the data center 50 (as shown in FIG. 8).

The communications message server 64 processes HTTP Internet Protocol (IP) message packet transmission formats including Transmission Control Protocol (TCP) and Universal Datagram Packet (UDP). Messages exchanged between the communications message server 64, response collector 66, and response aggregator 52 can be individual UDP message packets or bundles. Responses (i.e. UDP message packets) can be packetized (bundling) and de-packetized (unbundling) for increased communications efficiencies.

The communications message server 64 is connected to the cable distribution network 62 via high bandwidth communications links (not shown) as are known to those skilled in the art. High bandwidth communications links also connect response collector 66 with the response aggregator 52. In certain embodiments, the communications message server may encrypt responses for transmission to the response collector, where the responses are decrypted and processed for collection purposes.

The response collector 66 collects and processes normalized responses received from the communications message server 64. Responses are collected, processed, and logged in real time using one or more response collectors 66. The response collectors 66 transmit collected responses to one or more of the response aggregators 52. Each response aggregator 52 performs a real-time data collection, processing, logging and aggregation function. Response collectors 66 communicate in a subordinate way with response aggregators 52, exchanging data via both the push and pull methods. Response collectors 66 and response aggregators 52 are the same as response collectors 32 and response aggregators 34, respectively, in the response aggregator and collector network 12, as shown in FIG. 1.

Aggregators 52 transmit aggregated results to the application server 54, which communicates the results over a secure connection to a web server via the Internet 55 or other public network or alternative private network, which is operably linked to content providers (i.e. developers of interactive content) through developer client computers 56 and content producers via producer event browsers 58. The aggregated results can be processed by content producers 58 and inserted into a video broadcast signal to be transmitted to all participating subscribers. Using the high volume response collection and aggregation functions of the present invention, aggregated results can be accessed by content producers and inserted into interactive media broadcasts in real time. Participating subscribers can make response requests and have their participation be integrated into the event broadcast, thereby affecting the outcome of the interactive broadcast.

The heterogeneous interactive media response network of FIG. 6 includes one or more satellite television subscriber networks 44, one or more mobile/cellular networks 46, and/or one or more interactive PC and appliances networks 48, each constructed in a manner similar to the cable distribution network 42. For example, the satellite television subscriber network 44 includes a satellite distribution network 72 for broadcasting interactive content to subscribers via subscriber set top boxes 70. Response requests are transmitted through the network 72 to a communications message server 64. Normalized responses from the communications message server 64 are transmitted to a response collector 66 for collection, and to a response aggregator 52 for collection and aggregation.

Similarly, the mobile subscriber network 46 includes a mobile network 82 linked to subscribers via access devices 80 embodied in their cellular/mobile telephones or other electronic devices such as the PALM PILOT. Responses are transmitted through a communications message server 64, a response collector 66, and to an aggregator 52 in the data center 50.

The user of an interactive PC or networked appliance receives interactive broadcasts through the interactive PC/networked appliances subscriber network 48. Subscribers using interactive personal computers or networked appliances linked to the Internet or other public network 92 can receive broadcasts including interactive content. For example, the user/subscriber can access the Internet or other wide area network 92 through their personal computer 90 and log onto a particular web site or location which distributes the interactive broadcast content. The user can participate in the broadcast by submitting response requests using a mouse, a keyboard, a touch screen, voice commands, or other interactive access device. The requests are received by a network router (not shown) communicating with the Internet, and then transmitted to a communications message server 64 and the response collector and aggregator network (i.e. a response collector 66 and an aggregator 52).

It will be apparent to those of ordinary skill in the art that the communications message server 64, response collector 66, and aggregator 52 also refer to a plurality of each of these respective components. For a given subscriber network 42, 44, 46, or 48, there can be many communications message servers 64 and response collectors 66 feeding responses to the data center 50, where the responses can be collected and aggregated by one or more response aggregators 52. The response aggregators 52 have the capability of processing and logging responses to populate a data store (not shown) on the application server 54 for the purpose of communicating response results to the appropriate content providers 56 and content producers 58. In contrast to the prior art, however, the present invention is capable of processing a high volume of responses using a minimal number of components in a single, closed-loop system, where each collector and aggregator can process a high volume of responses in real time.

FIG. 7 illustrates an interactive response network for connecting multiple interactive television subscriber networks. The interactive response network preferably includes a plurality of individual iTV subscriber networks, including one or more cable television subscriber networks 42 and one or more satellite television subscriber networks 44. These networks can include a plurality of sub-networks for distributing interactive content via separate distribution channels 62 to separate groups of set top subscriber boxes. Each sub-network stream also includes its own communications message servers and response collectors. For example, a multiple stream cable subscriber network 142 can include sub-networks, each of the sub-networks having its own cable distribution network 62 for broadcasting interactive content to subscriber set top boxes 60 and for forwarding responses to the communications message servers 64 and response collectors 66. As shown in FIG. 7, the response collectors 66 can then transmit the collected responses to the same aggregator or group of aggregators 52.

In another embodiment of the present invention, one or more of the primary components (communications message server, response collector, and response aggregator) reside in a separate operating environment. As seen in FIG. 8, an interactive television response network may include one or more cable television subscriber networks 42, one or more satellite television subscriber networks 44, one or more multiple stream cable networks 142, and one or more cable subscriber networks 242 having a distributed component arrangement. In FIG. 8, the cable subscriber network 242 includes a cable distribution network 62 connected with subscriber set top boxes 60. Responses are forwarded to a communications message server 64 which is physically located at the site of the subscriber network 242. A collector 266 is located within the data center 50, instead of within the facilities of the subscriber network 242. In the embodiment shown in FIG. 8, the response collector 266 is located in close proximity to the response aggregator 52, which may be useful for security purposes, to control management of the response aggregator and collector network, and to add flexibility in communicating with multiple communications message servers. In some applications it may be desirable to house or co-locate collectors and aggregators together for more effective data transfer and logging. In other applications, response collectors and response aggregators can be housed together at the local network level, such as within an interactive television subscriber network. Such an arrangement would promote efficient handling of responses on a local level.

The above described interactive media response processing system is capable of processing responses from a variety of access devices through a plurality of different subscriber networks. Responses can be processed independent of the particular types of access devices or data transmission formats, as communications message servers normalize response information for transfer to collectors and aggregators. The above system can handle interactive responses from a variety of different event applications, including but not limited to interactive polling or voting, interactive sweepstakes, interactive advertising, interactive "game shows", electronic commerce, betting and wagering, and requests for additional information.

Although the invention has been described in detail including the preferred embodiments thereof, such description is for illustrative purposes only, and it is to be understood that changes and variations including improvements may be made by those skilled in the art without departing from the spirit or scope of the following claims.

## Claims

1. An interactive response processing system, the system comprising:
an interactive media subscriber network receiving response requests from a plurality of access devices associated with subscribers;
a communications message server operably connected to the subscriber network that receives a plurality of response requests in different formats and normalizes the response requests to a single format;
a collector connected to the communication message server and comprising a communication handler, a plurality of first event products, each corresponding to an interactive event application or a portion of an event or a collection of individual events, an interactive response management system, a master journal file and a gateway messenger, the communication handler collecting the response requests and routing them to and from appropriate first event products, each of them collecting, processing and
storing information related to a respective event as well as processing the response requests corresponding to the said event and logging at least a portion of the response requests through the interactive response management system in the master journal file, wherein the collector is configured to store interactive output from the subscriber network in a non-relational manner; the said first event products further routing the response requests to an aggregator connected to the collector through the gateway messenger, the aggregator aggregating the collected response requests into a plurality of second event products and having equivalent components with equivalent functions as those of the collector; and
an aggregator connected to the collector that aggregates the collected response requests into a plurality of first products.

2. The system of claim 1, wherein each of the first products processes the collected response requests corresponding to an event and logs at least a portion of the collected response requests.

3. The system of claim 1, wherein each of the second products generates and sends back response replies to the subscribers.

4. The system of claim 1, wherein the communications message server parses and formats the response requests for transmission to the collector.

5. The system of claim 1, further including a plurality of collectors, each of the collectors operably connected to the aggregator.

6. The system of claim 1, further including a plurality of collectors and a plurality of aggregators, wherein each of the aggregators is operably connected to one or more of said collectors.

7. The system of claim 1, wherein the aggregator transmits aggregated response information to an application server operably connected to the aggregator.

8. The system of claim 7, wherein the application server is operably connected to a producer event browser via a web server.

9. The system of claim 7, wherein the application server is operably connected to a developer computer via a web server.

10. The system of claim 1, wherein the collector and aggregator are configured to process a high volume of interactive output from the subscribers.

11. The system of claim 1, wherein the collector and aggregator processes at least 100,000 responses per second.

12. The system of claim 5, wherein there are n collectors and the n collectors can process at least n multiplied by 100,000 responses per second.

13. The system of claim 1, wherein the responses are processed by the collector and the aggregator so that they are transmitted through the system in real time.

14. The system of claim 1, further including a plurality of subscriber networks, each of the subscriber networks being operably connected to at least one communications message server, wherein the at least one communications message server is operably linked to at least one collector.

15. The system of claim 1, wherein the aggregator provides interactive output of the subscribers to a content producer.

16. A method for processing responses in an interactive media network, comprising the steps of:
providing an interactive media subscriber network, said subscriber network including a plurality of access devices configured to transmit response requests from one or more subscribers to said subscriber network;
receiving a plurality of response requests with different formats from the one or more subscribers, normalizing each of the response requests to a single format and outputting the normalized response requests;
collecting the response requests and routing them to and from appropriate first event products,
collecting, processing and storing information related to a respective event as well as processing the response requests corresponding to the said event and logging at least a portion of the response requests in a master journal file, the storing of the response requests being in a non-relational manner;
further routing the response requests; and
aggregating the collected response requests into a plurality of products.

17. The method of claim 16, wherein each of the response requests are parsed and formatted before collecting.

18. The method of claim 17, wherein the parsing and formatting step is performed in a communications message server, and the collecting step is performed in a collector.

19. The method of claim 18, further including the step of:
sending one or more response replies to at least one of the one or more subscribers via the subscriber network.

20. The method of claim 16, further including the step of:
providing access to aggregated response information to a producer via a producer event browser.

21. The method of claim 16, further including the step of:
providing access to aggregated response information to a developer via a developer computer.

22. The method of claim 16 wherein the collecting and aggregating is performed in real time.

23. The method of claim 16, wherein said collecting and aggregating are performed at a high transaction rate.

24. The method of claim 23, wherein the transaction rate is at least 100,000 responses per second.

25. The method of claim 16, further including the step of:
providing a communications message server in which said normalizing step is performed.

26. The method of claim 16, further including the step of:
processing the aggregated response requests in an application server for access by a producer.

27. The method of claim 16, further including the step of:
processing the aggregated response requests in an application server for access by a developer.

28. The method of claim 16, further comprising processing the collected response requests corresponding to an event and logging at least a portion of the collected response requests.

## Patentansprüche

1. Interaktives Reaktions- bzw. Antwortverarbeitungssystem, wobei das System aufweist:
ein interaktives Medienteilnehmernetzwerk, welches Reaktionsanforderungen von einer Vielzahl von Zugriffseinrichtungen, welche mit Teilnehmern verbunden sind, erhält;
einen Kommunikationsnachrichten-Server, welcher mit dem Teilnehmernetzwerk operativ verbunden ist, welches eine Vielzahl von Reaktionsanforderungen in unterschiedlichen Formaten empfängt und die Reaktionsanforderungen auf ein einzelnes Format normiert;
einen Kollektor, welcher mit dem Kommunikationsnachrichten-Server verbunden ist und welcher ein Kommunikationsbedienprogramm aufweist, eine Vielzahl von Erstereignisprodukten, wobei jedes einer interaktiven Ereignisapplikation oder einem Teil eines Ereignisses oder einer Sammlung von individuellen Ereignissen entspricht, ein interaktives Reaktions-Managementsystem, eine Hauptjournaldatei und einen Gateway-Melder, wobei das Kommunikationsbedienprogramm die Reaktionsanforderungen sammelt und sie zu und von geeigneten Erst-Ereignis-Produkten leitet, wobei jedes von ihnen Informationen sammelt, verarbeitet und speichert, welche sich auf ein jeweiliges Ereignis beziehen, und ebenso die Reaktionsanforderungen verarbeitet, welche zu dem Ereignis gehören und wenigstens einen Teil der Reaktionsanforderungen durch das interaktive Reaktions-Managementsystem in der Hauptjournaldatei einlogged, wobei der Kollektor so konfiguriert ist, dass er ein interaktives Ausgangssignal von dem Teilnehmernetzwerk in einer nicht relationalen Weise speichert; wobei die Erst-Ereignis-Produkte ferner die Reaktionsanforderungen zu einem Aggregator leiten, welcher mit dem Kollektor über den Gateway-Melder verbunden ist, wobei der Aggregator die gesammelten Reaktionsanforderungen in einer Vielzahl von Zweit-Ereignis-Produkten ansammelt und wobei dieser äquivalente Bauteile mit äquivalenten Funktionen aufweist, wie diejenigen des Kollektors; und
ein Aggregator, welcher mit dem Kollektor verbunden ist, welcher die gesammelten Reaktionsanforderungen in einer Vielzahl von ersten Produkten vereinigt.

2. System nach Anspruch 1, wobei jedes der ersten Produkte die gesammelten Reaktionsanforderungen entsprechend einem Ereignis verarbeitet und wenigstens einen Teil der gesammelten Reaktionsanforderungen einlogged.

3. System nach Anspruch 1, wobei jedes der zweiten Produkte Reaktionserwiderungen an die Teilnehmer erzeugt und rücksendet.

4. System nach Anspruch 1, wobei der Kommunikationsnachrichten-Server die Reaktionsanforderungen für die Übertragung an den Kollektor grammatisch definiert bzw. analysiert und formatiert.

5. System nach Anspruch 1, welches ferner eine Vielzahl von Kollektoren beinhaltet, von denen jeder der Kollektoren mit dem Aggregator operativ verbunden ist.

6. System nach Anspruch 1, welches ferner eine Vielzahl von Kollektoren und eine Vielzahl von Aggregatoren beinhaltet, wobei jeder der Aggregatoren mit einem oder mehreren der Kollektoren operativ verbunden ist.

7. System nach Anspruch 1, wobei der Aggregator die vereinigte Reaktionsinformation an einen Applikationsserver überträgt, welcher mit dem Aggregator operativ verbunden ist.

8. System nach Anspruch 7, wobei der Applikationsserver mit einem Herstellerereignis-Browser über einen Web-Server operativ verbunden ist.

9. System nach Anspruch 7, wobei der Applikationsserver mit einem Entwicklercomputer über einen Web-Server operativ verbunden ist.

10. System nach Anspruch 1, wobei der Kollektor und der Aggregator so konfiguriert sind, dass sie ein großes Volumen an interaktiven Ausgangssignalen von den Teilnehmern verarbeiten können.

11. System nach Anspruch 1, wobei der Kollektor und der Aggregator wenigstens 100.000 Reaktionen pro Sekunde verarbeiten.

12. System nach Anspruch 5, in welchem es n Kollektoren gibt und die n Kollektoren wenigstens n mal 100.000 Reaktionen pro Sekunde verarbeiten können.

13. System nach Anspruch 1, wobei die Reaktionen durch den Kollektor und den Aggregator verarbeitet werden, so dass sie über das System in Echtzeit übertragen werden.

14. System nach Anspruch 1, welches ferner eine Vielzahl von Teilnehmernetzwerken beinhaltet, wobei jedes der Teilnehmernetzwerke mit wenigstens einem Kommunikationsnachrichten-Server operativ verbunden ist, wobei der wenigstens eine Kommunikationsnachrichten-Server mit wenigstens einem Kollektor operativ verbunden ist.

15. System nach Anspruch 1, wobei der Aggregator interaktive Ausgangssignale der Teilnehmer an einen Inhalthersteller liefert.

16. Verfahren zum Verarbeiten von Reaktionen in einem interaktiven Mediennetzwerk, welches die Schritte aufweist von:
Liefern eines interaktiven Medienteilnehmernetzwerkes, wobei das Teilnehmernetzwerk eine Vielzahl von Zugriffseinrichtungen beinhaltet, welche so konfiguriert sind, dass sie Reaktionsanforderungen von einem oder mehreren Teilnehmern an das Teilnehmernetzwerk übertragen;
Empfangen einer Vielzahl von Reaktionsanforderungen mit unterschiedlichen Formaten von einem oder mehreren Teilnehmern, Normieren jeder der Reaktionsanforderungen auf ein einzelnes Format und Ausgeben der normierten Reaktionsanforderungen;
Sammeln der Reaktionsanforderungen und Weiterleiten derselben zu und von geeigneten Erst-Ereignis-Produkten,
Sammeln, Verarbeiten und Speichern von Information, welche auf ein jeweiliges Ereignis bezogen ist, sowie Verarbeiten der Reaktionsanforderungen entsprechend dem Ereignis und Einloggen von wenigstens einem Teil der Reaktionsanforderungen in einer Hauptjournaldatei, wobei das Speichern der Reaktionsanforderungen in einer nicht relationalen Weise geschieht;
ferner Weiterleiten der Reaktionsanforderungen; und
Vereinigen der gesammelten Reaktionsanforderungen in einer Vielzahl von Produkten.

17. Verfahren nach Anspruch 16, wobei jede der Reaktionsanforderungen vor dem Sammeln grammatisch definiert bzw. analysiert und formatiert wird.

18. Verfahren nach Anspruch 17, wobei der Schritt des grammatischen Definierens bzw. Analysierens und Formatierens in einem Kommunikationsnachrichten-Server durchgeführt wird und der Schritt des Sammelns in einem Kollektor durchgeführt wird.

19. Verfahren nach Anspruch 18, welches ferner den Schritt beinhaltet:
Senden von einer oder mehreren Reaktionserwiderungen an wenigstens einen des einen oder der mehreren Teilnehmer über das Teilnehmernetzwerk.

20. Verfahren nach Anspruch 16, welches ferner den Schritt beinhaltet:
Liefern des Zugriffs zu einer aggregierten bzw. vereinigten Reaktionsinformation für einen Hersteller über einen Herstellerereignis-Browser.

21. Verfahren nach Anspruch 16, welches ferner den Schritt beinhaltet:
Liefern des Zugriffs zu aggregierter Reaktionsinformation an einen Entwickler über einen Entwicklercomputer.

22. Verfahren nach Anspruch 16, wobei das Sammeln und Aggregieren in Echtzeit durchgeführt wird.

23. Verfahren nach Anspruch 16, wobei das Sammeln und Aggregieren mit einer hohen Transaktionsrate durchgeführt wird.

24. Verfahren nach Anspruch 23, wobei die Transaktionsrate wenigstens 100.000 Reaktionen pro Sekunde umfasst.

25. Verfahren nach Anspruch 16, welches ferner den Schritt beinhaltet:
Liefern eines Kommunikationsnachrichten-Servers, in welchem der Normierschritt durchgeführt wird.

26. Verfahren nach Anspruch 16, welches ferner den Schritt beinhaltet:
Verarbeiten der aggregierten Reaktionsanforderungen in einem Applikationsserver für den Zugriff durch einen Hersteller.

27. Verfahren nach Anspruch 16, welches ferner den Schritt beinhaltet:
Verarbeiten der aggregierten Reaktionsanforderungen in einem Applikationsserver für den Zugriff durch einen Entwickler.

28. Verfahren nach Anspruch 16, welches ferner das Verarbeiten der aggregierten Reaktionsanforderungen umfasst, entsprechend einem Ereignis, und Einloggen wenigstens eines Teils der aggregierten Reaktionsanforderungen wird.

## Revendications

1. Système interactif de traitement de réponse, le système comprenant :
un réseau interactif d'abonnés de supports recevant des demandes de réponse en provenance d'une pluralité de dispositifs d'accès associés à des abonnés ;
un serveur de messages de communication relié de manière opérationnelle au réseau d'abonnés qui reçoit une pluralité de demandes de réponse dans des formats différents et qui normalise les demandes de réponse en un format unique ;
un collecteur relié au serveur de messages de communication et comprenant un gestionnaire de communication, une pluralité de premiers produits d'événement, chacun correspondant à une application d'événement interactif ou à une partie d'un événement ou à un rassemblement d'événements individuels, un système interactif de gestion de réponse, un fichier de journal maître et une messagerie de passerelle, le gestionnaire de communication rassemblant les demandes de réponse et les acheminant vers et en provenance de premiers produits d'événement appropriés, chacun d'entre eux rassemblant, traitant et stockant des informations ayant trait à un événement respectif, traitant aussi bien les demandes de réponse correspondant audit événement et enregistrant au moins une partie des demandes de réponse par l'intermédiaire du système interactif de gestion de réponse dans le fichier de journal maître, dans lequel le collecteur est configuré pour stocker une sortie interactive en provenance du réseau d'abonnés d'une manière non relationnelle ; lesdits premiers produits d'événement acheminant de plus les demandes de réponse à un assembleur relié au collecteur par la messagerie de passerelle, l'assembleur agrégeant les demandes de réponse rassemblées en une pluralité de seconds produits d'événement et ayant des composants équivalents avec des fonctions équivalentes, comme celles du collecteur ; et
un assembleur relié au collecteur qui agrège les demandes de réponse rassemblées en une pluralité de premiers produits.

2. Système selon la revendication 1, dans lequel chacun des premiers produits traite les demandes de réponse rassemblées correspondant à un événement et enregistre au moins une partie des demandes de réponse rassemblées dans un journal.

3. Système selon la revendication 1, dans lequel chacun des seconds produits produit et renvoie des répliques de réponse aux abonnés.

4. Système selon la revendication 1, dans lequel le serveur de messages de communication fait l'analyse syntaxique et formate les demandes de réponse pour transmission au collecteur.

5. Système selon la revendication 1, comprenant de plus une pluralité de collecteurs, chacun des collecteurs étant relié de manière opérationnelle à l'assembleur.

6. Système selon la revendication 1, comprenant de plus une pluralité de collecteurs et une pluralité d'assembleurs, dans lequel chacun des assembleurs est relié de manière opérationnelle à un ou plusieurs desdits collecteurs.

7. Système selon la revendication 1, dans lequel l'assembleur transmet des informations de réponse agrégées à un serveur d'application relié de manière opérationnelle à l'assembleur.

8. Système selon la revendication 7, dans lequel le serveur d'application est relié de manière opérationnelle à un navigateur d'événement de producteur par l'intermédiaire d'un serveur Web.

9. Système selon la revendication 7, dans lequel le serveur d'application est relié de manière opérationnelle à un ordinateur de développeur par l'intermédiaire d'un serveur Web.

10. Système selon la revendication 1, dans lequel le collecteur et l'assembleur sont configurés pour traiter un volume élevé de sortie interactive en provenance des abonnés.

11. Système selon la revendication 1, dans lequel le collecteur et l'assembleur traitent au moins 100 000 réponses par seconde.

12. Système selon la revendication 5, dans lequel il y a n collecteurs et les n collecteurs peuvent traiter au moins n multiplié par 100 000 réponses par seconde.

13. Système selon la revendication 1, dans lequel les réponses sont traitées par le collecteur et l'assembleur de sorte qu'elles sont transmises par le système en temps réel.

14. Système selon la revendication 1, comprenant de plus une pluralité de réseaux d'abonnés, chacun des réseaux d'abonnés étant relié de manière opérationnelle à au moins un serveur de messages de communication, dans lequel l'au moins un serveur de messages de communication est lié de manière opérationnelle à au moins un collecteur.

15. Système selon la revendication 1, dans lequel l'assembleur fournit une sortie interactive des abonnés à un producteur de contenu.

16. Procédé pour traiter des réponses dans un réseau interactif de supports, comprenant les étapes consistant à :
fournir un réseau interactif d'abonnés de supports, ledit réseau d'abonnés comprenant une pluralité de dispositifs d'accès configurés pour transmettre des demandes de réponse en provenance d'un ou plusieurs abonnés audit réseau d'abonnés ;
recevoir une pluralité de demandes de réponse avec des formats différents en provenance du ou des plusieurs abonnés, normaliser chacune des demandes de réponse en un format unique et sortir les demandes de réponse normalisées ;
rassembler les demandes de réponse et les acheminer vers et en provenance de premiers produits d'événement appropriés ;
rassembler, traiter et stocker des informations ayant trait à un événement respectif aussi bien que traiter les demandes de réponse correspondant audit événement et enregistrer au moins une partie des demandes de réponse dans un fichier de journal maître, le stockage des demandes de réponse s'effectuant d'une manière non relationnelle ;
acheminer en outre les demandes de réponse ; et
agréger les demandes de réponse rassemblées en une pluralité de produits.

17. Procédé selon la revendication 16, dans lequel chacune des demandes de réponse subit une analyse syntaxique et est formatée avant rassemblement.

18. Procédé selon la revendication 17, dans lequel l'étape d'analyse syntaxique et de formatage est effectuée dans un serveur de messages de communication et l'étape de rassemblement est effectuée dans un collecteur.

19. Procédé selon la revendication 18, comprenant de plus l'étape consistant à :
envoyer une ou plusieurs répliques de réponse à au moins un du ou des plusieurs abonnés par l'intermédiaire du réseau d'abonnés.

20. Procédé selon la revendication 16, comprenant de plus l'étape consistant à :
fournir un accès à des informations de réponse agrégées à un producteur par l'intermédiaire d'un navigateur d'événement de producteur.

21. Procédé selon la revendication 16, comprenant de plus l'étape consistant à :
fournir un accès à des informations de réponse agrégées à un développeur par l'intermédiaire d'un ordinateur de développeur.

22. Procédé selon la revendication 16, dans lequel le rassemblement et l'agrégation sont effectués en temps réel.

23. Procédé selon la revendication 16, dans lequel ledit rassemblement et ladite agrégation sont effectués à un débit de transaction élevé.

24. Procédé selon la revendication 23, dans lequel le débit de transaction est d'au moins 100 000 réponses par seconde.

25. Procédé selon la revendication 16, comprenant de plus l'étape consistant à :
fournir un serveur de messages de communication dans lequel ladite étape de normalisation est effectuée.

26. Procédé selon la revendication 16, comprenant de plus l'étape consistant à :
traiter les demandes de réponse agrégées dans un serveur d'application pour un accès par un producteur.

27. Procédé selon la revendication 16, comprenant de plus l'étape consistant à :
traiter les demandes de réponse agrégées dans un serveur d'application pour un accès par un développeur.

28. Procédé selon la revendication 16, comprenant de plus l'étape consistant à traiter les demandes de réponse rassemblées correspondant à un événement et à enregistrer au moins une partie des demandes de réponse rassemblées dans un journal.
